(19) Europäisches Patentamt

European Patent Office

Office européen des brevets

(11) **EP 1 528 717 B1**

(12) **EUROPEAN PATENT SPECIFICATION**

(45) Date of publication and mention
of the grant of the patent:
**22.11.2006 Bulletin 2006/47**

(51) Int Cl.:
*H04L 12/28* (2006.01)     *H04L 12/56* (2006.01)

(21) Application number: **04020389.5**

(22) Date of filing: **27.08.2004**

(54) **Broadcast method in WPAN and communication system using the same**

Rundfunkverfahren in WPAN und Kommunikationssystem unter Verwendung desselben

Procédé de diffusion dans un réseau WPAN et système de communication l'utilisant

(84) Designated Contracting States:
**DE FI FR GB NL SE**

(30) Priority: **28.10.2003 KR 2003075363**

(43) Date of publication of application:
**04.05.2005 Bulletin 2005/18**

(73) Proprietor: SAMSUNG ELECTRONICS CO., LTD.
Suwon-si,
Gyeonggi-do (KR)

(72) Inventor: **Kim, Won-soo**
A-520 Dorm. of Samsung
Yongin-si
Gyeonggi-do (KR)

(74) Representative: **Grünecker, Kinkeldey,
Stockmair & Schwanhäusser
Anwaltssozietät
Maximilianstrasse 58
80538 München (DE)**

(56) References cited:
**WO-A-01/24452          WO-A-02/063806**

- **LAN/MAN STANDARDS COMMITTEE OF THE IEEE COMPUTER SOCIETY: "Draft P 802,15,3, Part 15.3: Wireless Medium Access Control (MAC) and Physical Layer (PHY) Specifications for High Rate Wireless Personal Area Networks (WPAN), pg:1-xiv, chptrs: 7, 8" DRAFT P802.15.3/D17, XX, XX, 17 February 2003 (2003-02-17), pages 107-228, XP002294149**
- **LAN/MAN STANDARDS COMMITTEE OF THE IEEE COMPUTER SOCIETY: "Part 15.4: Wireless Medium Access Control (MAC) and Physical Layer (PHY) Specifications for Low-Rate Wireless Personal Area Networks (LR-WPANs), pg:i-viii, chptrs: 1-7" IEEE STD 802.15.4 - 2003, 1 October 2003 (2003-10-01), pages 1-187, XP002298609**
- **ZHENG J ET AL: "WILL IEEE 802.15.4 MAKE UBIQUITOUS NETWORKING A REALITY?: A DISCUSSION ON A POTENTIAL LOW POWER, LOW BIT RATE STANDARD" IEEE COMMUNICATIONS MAGAZINE, IEEE SERVICE CENTER. PISCATAWAY, N.J, US, vol. 42, no. 6, June 2004 (2004-06), pages 140-146, XP001198209 ISSN: 0163-6804**

**Description**

The present invention relates generally to a broadcast method and a communication system using the same, and more particularly, to a broadcast method in a wireless personal area network which enables stable reception of broadcast content at IEEE 802.15.4 devices linked to the wireless personal area network, and a communication system using the same.

2. Description of the Related Art

A personal area network, briefly called as PAN, is based on the concept that each individual user has his own network, which is contrary to the concept of LAN and WAN. The PAN constructs a network with the devices owned by the individual user for the user's convenience, and the Wireless PAN (WPAN) has been suggested to realize the PAN in the wireless manner.

In an effort to establish PAN in the wireless manner, IEEE 802.15 Working Group has set WPAN as the standard of the short-distance wireless network, and has four task groups (TG). IEEE 802.15.1 is well known as 'Bluetooth', and IEEE 802.15.3 and IEEE 802.15.3a perform standardization of the high-rate WPAN, and IEEE 802.15.4, or ZigBee, performs low-rate WPAN below speeds of 250kbps.

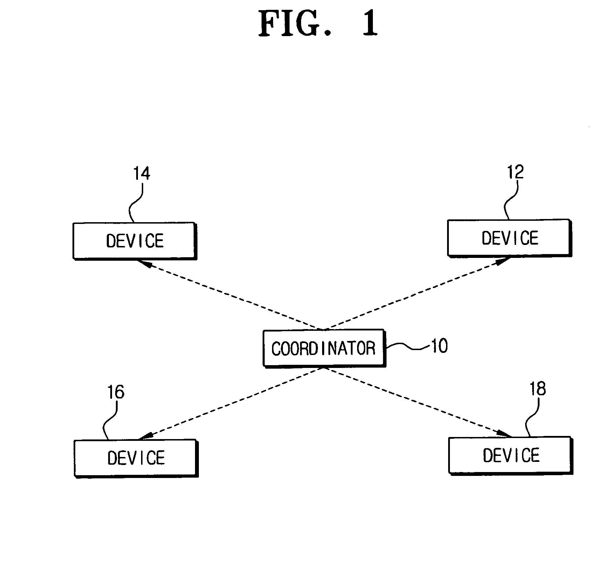

FIG. 1 illustrates the structure of a general WPAN. Referring to FIG. 1, a plurality of devices 10, 12, 14, 16 and 18 construct a network, and one of the devices 10 is selected as a coordinator. The coordinator 10 broadcasts a synchronous signal, a beacon frame, to the rest of devices 12, 14, 16, and 18 in order to to synchronize them. In the WPAN, communication ranges of the neighboring networks sometimes overlap with each other, resulting in interference.

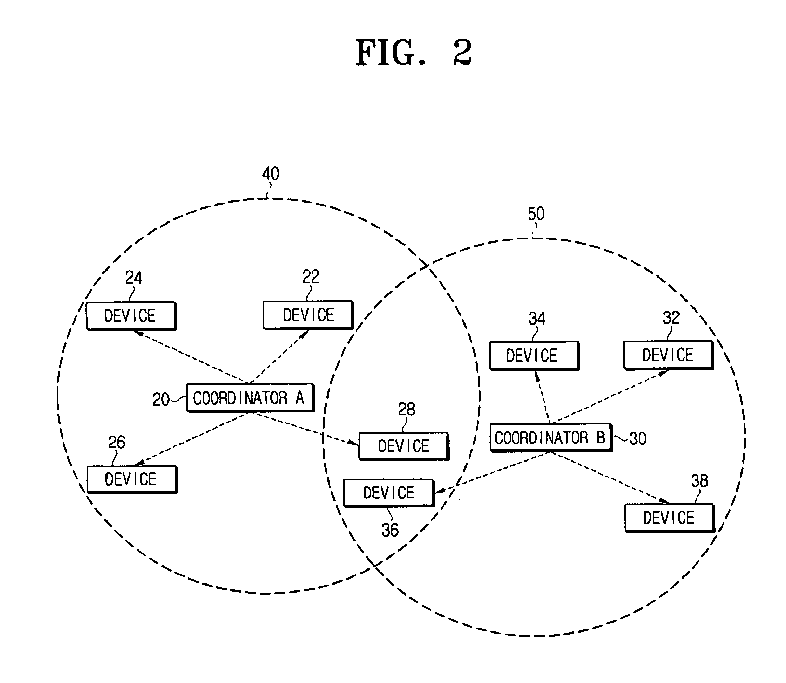

FIG. 2 illustrates communication ranges of two adjacent WPANs partially overlapping each other. Referring to FIG. 2, the first WPAN 40, which is synchronized by the coordinator A 20, and the second WPAN 50, which is synchronized by the coordinator B 30, have a partially overlapping communication area. If a frequency of these two WPANs 40 and 50 overlap, or if the WPANs 40 and 50 use an identical PAN ID, devices 28 and 36 within the overlap area do not perform smooth communication, and therefore, the coordinator has to change the currently- used channel or PAN ID.

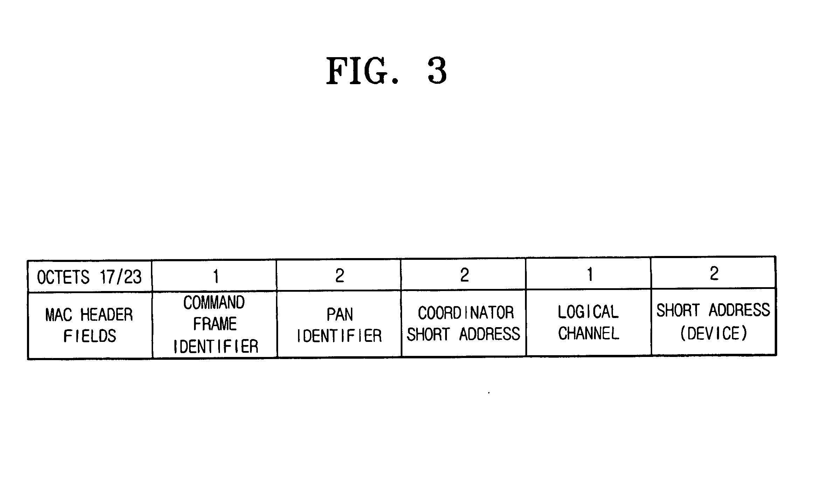

According to IEEE 802.15.4, if the same PAN ID is used in two different WPANs, the device recognizing this fact notifies the coordinator of the network with the PAN ID conflict notification command which is shown in detail in FIG. 3. Responsive to the PAN ID conflict notification command, the coordinator broadcasts a coordinator realignment command to the devices, instructing them to change their PAN ID. The channel is changed in a likewise way. That is, the coordinator broadcasts a coordinator realignment command to the devices, instructing to change the currently-used channel to another one.

The problem is that not all the devices within the network are in an RX_ON state to receive the coordinator realignment command broadcasted from the coordinator. In other words, some devices may not be able to receive the broadcast coordinator realignment command, and as these devices do not know about the changed channel or PAN ID, become orphan in state in which the device cannot communicate with other devices. In order to escape from the orphan state, the device undergoes synchronization and orphan scan processes. The following equation represents the overhead time for the synchronization and orphan scan.

[Equation 1]

Overhead Time by Synchronization

=Symbol Duration＊ Base Superframe Duration ＊

$(2^{BO}+1)$ ＊ Max Lost Beacons = 16μs ＊ (960 ＊ $(2^{BO}+1)$) ＊ 4

where, $0 \le BO \le 14$.

The overhead time for orphan scan is represented as follows:

[Equation 2]

Overhead Time by Orphan Scan = Response Wait Time * Number of Scan Channel

= 30720 symbols * 16μs/symbol * Number of Scan Channel

where, $1 \leq$ *Number of Scan Channel* $\leq 16$.

By the Equations 1 and 2, it can be estimated that approximately 0.12s to 1006s of overhead time, depending on the length of beacon frame, is necessary for the synchronization, and approximately 492ms to 7872ms of overhead time, depending on the number of scan channels, is necessary for the orphan scan.

The overhead time of isolated devices for the synchronization and orphan scan causes deterioration of overall communication efficiency of the communication system. Therefore, it is necessary to guarantee the reception of broadcast information at each linked device of the WPAN to avoid such deterioration of communication efficiency.

LAN/MAN Standards Committee of the IEEE Computer Society: "Draft P 802,15,3, Part 15.3: Wireless Medium Access Control (MAC) and Physical Layer (PHY) Specifications for High Rate Wireless Personal Area Networks (WPAN), pg: 1-xiv, chapters: 7, 8" Draft P802.15.3/D17, 17 February, 2003, pages 107-228, discloses that the PNC should periodically listen in the current channel to detect interference, the presence of other 802.15.3 piconets or the presence of other wireless networks. The PNC should also periodically listen to other overlapping channels for the presence of the same types of DEVs. If the PNC detects the presence of another 802.15.3 piconet, the PNC may, e.g., change channels to one that is unoccupied. If the PNC decides to initiate a dynamic channel change, the PNC shall broadcast the piconet parameter change. The piconet parameter change shall contain the channel index of the new channel to which the PNC will be moving the piconet, and the change beacon number field that contains the beacon number of the first beacon that will be sent on the new channel.

LAN/MAN Standards Committee of the IEEE Computer Society: "Part 15.4: Wireless Medium Access Control (MAC) and Physical Layer (PHY) Specifications for Low-Rate Wireless Personal Area Networks (LR-WPANs), pg:i-viii, chapters: 1-7" IEEE STD 802.15.4 - 2003, 1 October 2003, pages 1-187, refers to PAN identifier conflict resolution wherein it is explained that in some instances, a situation could occur in which two PANs exist in the same POS with the same PAN identifier. The respective conflict resolution procedure is described therein.

WO 01/24452 A refers to a method for associating an apparatus in a first communication network, the transmissions in the first network being carried out on a first channel. The method comprises further steps of detecting with that apparatus the first transmission channel, determining on that channel colliding signals coming from the first network and a second network. In the case of a collision, the method includes the step of transmitting a request for a channel change towards the first network. The described method in particular refers to a high performance radio local network type 2 (HIPERLAN 2).

WO 02/063806 A refers to a system and a corresponding method for sharing bandwidth by a plurality of devices in a wireless personal area network or a wireless local area network. A media access control protocol frame includes a beacon signal sent from a coordinator including coordination information to each of the devices of the WPAN, an optional contention access period, and a contention free period that includes an additional shared period that is managed as a slot cycle time division multiple access period, a polling period or as a management period. The coordination information includes a device-unique start time indicator and a transmission duration defining a guaranteed time slot within the contention free period of the frame for each of the networked devices. Each of the network devices sleeps while not receiving the beacon and not transmitting data during their guaranteed time slot, thereby reducing power consumption as compared to slot cycle time division multiple access or polling schemes which require listening by all devices during the contention free period.

It is an object of the present invention to provide an improved broadcast method for a wireless network and a respective communication system thereof, wherein all devices within the network can receive the change information and therefore are prevented from becoming isolated by additionally avoiding overhead time required for performing re-synchronization or an orphan scan, thus improving the overall communication efficiency.

This object is solved by the present invention and in particular by the subject matter of the independent claims. Preferred embodiments are subject matter of the dependent claims.

An aspect of the present invention is to provide a broadcast method in a WPAN, which guarantees high communication efficiency by ensuring a reception of broadcast information at each device of the WPAN, and a communication system using the same.

The above aspects and/or other features of the present invention can be substantially achieved by providing a broadcast method for a wireless network consisting of a plurality of connected devices in which one device is selected to be a coordinator and the rest of the devices are synchronized to a synchronous signal broadcasted by the coordinator, which comprises the steps of: checking to see whether one of a current channel and a PAN ID of the wireless network needs to be changed or not; and inserting a change information for changing one of the channel and the PAN ID in the synchronous signal and broadcasting the synchronous signal, when one of the channel and the PAN ID is determined to be changed in the checking step. Additionally, a step, in which the devices change one of the channel and the PAN ID based on the change information inserted in the synchronous signal, is further provided.

The wireless network is a low-rate wireless personal area network under the IEEE 802.15.4 standard. The synchronous signal is a beacon frame. The change information comprises a coordinator realignment command inserted in a payload field of the beacon frame, and a predetermined identify bit inserted in the reserved bit of a frame control field of the beacon frame. Whether to change the PAN ID or not is determined based on a PAN ID conflict command transmitted from one of the plurality of connected devices.

Consistent with one aspect of the present invention, a communication system comprises: at least one device connected to a wireless network; and a coordinator for synchronizing the devices by broadcasting a synchronous signal. The coordinator checks to see whether one of a current channel and a PAN ID of the wireless network needs to be changed or not, and if so, inserts a change information for changing one of the channel and the PAN ID in the synchronous signal and broadcasting the synchronous signal.

The coordinator comprises: a transmitting and a receiving unit for providing a communication interface for communication with the connected devices; a channel status notifying unit for checking to see whether the channel needs to be changed or not and outputting a corresponding signal; a channel selection management unit for outputting a change information of the channel in accordance with the signal outputted from the channel status notifying unit; a PAN ID changing unit for checking to see whether the PAN ID needs to be changed or not, and if so, outputting a change information of the PAN ID; and a beacon frame generating unit for inserting the change signal from the channel selection management unit and the PAN ID change notifying unit in the synchronous signal, and broadcasting the synchronous signal to the connected devices.

The connected devices each comprises: a transmitting and receiving unit for providing a communication interface with the coordinator; a beacon frame interpretation unit for extracting the change information from the synchronous signal; a channel changing unit for changing the channel according to the extracted change information; and a PAN ID changing unit for changing the PAN ID according to the extracted change information.

The wireless network is a low-rate wireless personal area network (WPAN) under the IEEE 802.15.4 standard. The synchronous signal is a beacon frame. The change information comprises a coordinator realignment command inserted in a payload field of the beacon frame, and a predetermined identify bit inserted in the reserved bit of a frame control field of the beacon frame. Whether to change the PAN ID or not is determined based on a PAN ID conflict command transmitted from one of the plurality of connected devices.

The above aspects and features of the present invention will be more apparent by describing certain embodiments of the present invention with reference to the accompanying drawings, in which:

FIG. 1 is a view illustrating the structure of a general wireless personal area network (WPAN);

FIG. 2 is a view illustrating the communication ranges of two neighboring WPANs partially overlapping;

FIG. 3 is a view illustrating the structure of a coordinator realignment command;

FIGS. 4 and 5 are schematic block diagrams of a communication system using the broadcast method consistent with an embodiment of the present invention;

FIG. 6 is a flowchart outlining the broadcast method consistent with an embodiment of the present invention;

FIG. 7 is a view illustrating the structure of a beacon frame which is used by the broadcast method consistent with an embodiment of the present invention; and

FIG. 8 is a view outlining the broadcast method consistent with an embodiment of the present invention.

Certain exemplary embodiments of the present invention will be described in greater detail with reference to the accompanying drawings.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

In the following exemplary embodiment of the present invention, the broadcast method will be applied in the IEEE 802.15.4 WPAN. However, it will be appreciated that it is only for exemplary purposes, and the present invention can be applied in various wireless network environments so long as it satisfies the conditions consistent with the present invention.

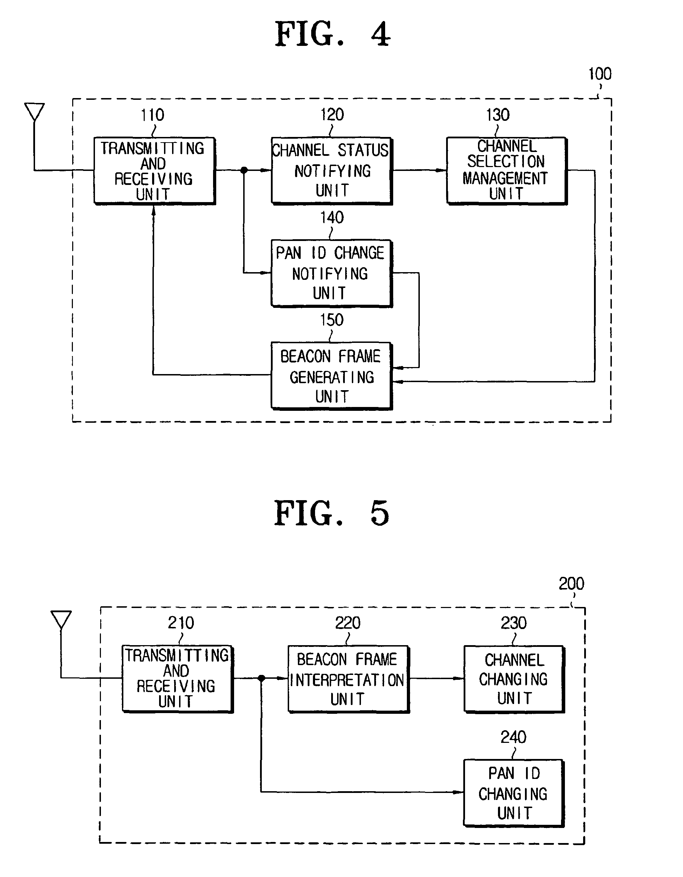

FIGS. 4 and 5 are schematic block diagrams of a communication system using a broadcast method consistent with an embodiment of the present invention. More specifically, FIG. 4 is a schematic block diagram of a wireless communication device which operates as a coordinator, and FIG. 5 is a schematic block diagram of a wireless communication device which operates as a device.

Referring to FIG. 4, the coordinator 100 comprises a transmitting and receiving unit 110, a channel status notifying unit 120, a channel selection management unit 130, a PAN ID change notifying unit 140 and a beacon frame generating unit 150.

The transmitting and receiving unit 110 provides a communication interface for communication with other communication devices. The channel status notifying unit 120 checks the status of the channel in use, and if need arises, notifies the channel selection management unit 130 to change the channel. The channel selection management unit 130, responsive to the notification from the channel status notifying unit 120, selects a new communication channel, and transmits related information to the beacon frame generating unit 150.

When the PAN ID conflict notification command is received from a certain device of the WPAN, the PAN ID change notifying unit 140 interprets the command, changes the PAN ID, and transmits the related information to the beacon frame generating unit 150.

With reference to the information transmitted from the channel selection management unit 130 or the PAN ID change notifying unit 140, the beacon frame generating unit 150 generates a beacon frame which contains therein the communication channel or PAN ID change information, and the generated beacon frame is broadcast to the linked devices of the WPAN.

Referring to FIG. 5, the linked wireless communication devices 200 of the WPAN each comprises a transmitting and receiving unit 210, a beacon frame interpretation unit 220, a channel changing unit 230 and a PAN ID changing unit 240.

The transmitting and receiving unit 210 provides a communication interface for communication with other communication devices. The beacon frame interpretation unit 220 interprets the beacon frame broadcasted from the coordinator, if the information about a change of communication channel or PAN ID is contained in the beacon frame, the beacon frame interpretation unit 220 extracts the information about the change and transmits the extracted information to the channel changing unit 230 or PAN ID changing unit 240. The channel changing unit 230 selects a new communication channel according to the change information which is transmitted from the beacon frame interpretation unit 220. In the same way, the PAN ID is changed at the PAN ID changing unit 240 based on the information transmitted from the beacon frame interpretation unit 220.

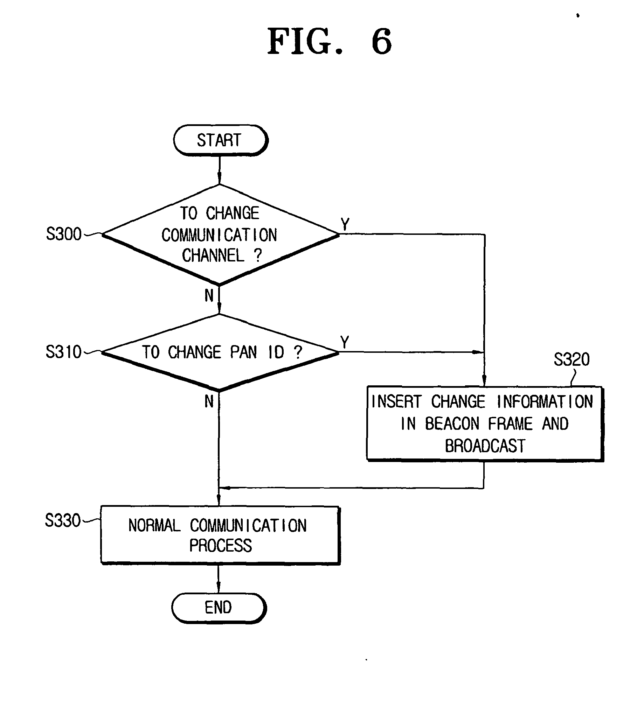

FIG. 6 is a flowchart illustrating a broadcast method of a WPAN consistent with an embodiment of the present invention.

Referring to FIGS. 4 to 6, the wireless communication device 100 operating as a coordinator, checks to see whether a new channel is necessary because the channel status has deteriorated due to factors such as interference with an adjacent network (S300). If there is no need to change the current channel, the coordinator 100 checks to see whether a PAN ID conflict notification command is transmitted from the devices, requesting to change the current PAN ID (S310). If there is no need to change the PAN ID, communication processes are carried out (S330).

If checking at S300 or S310 indicates a need for a channel or a PAN ID change, the information about change of a channel or a PAN ID is inserted in the beacon frame and the beacon frame is broadcasted (S320). Then normal communication processes are carried out (S330). By utilizing the fact that the linked devices are in the information receivable state with respect to the coordinator in the process of the beacon frame broadcast, the information about change is inserted in the broadcast frame and as a result, the devices can be prevented from becoming isolated due to an inability of receiving the change information.

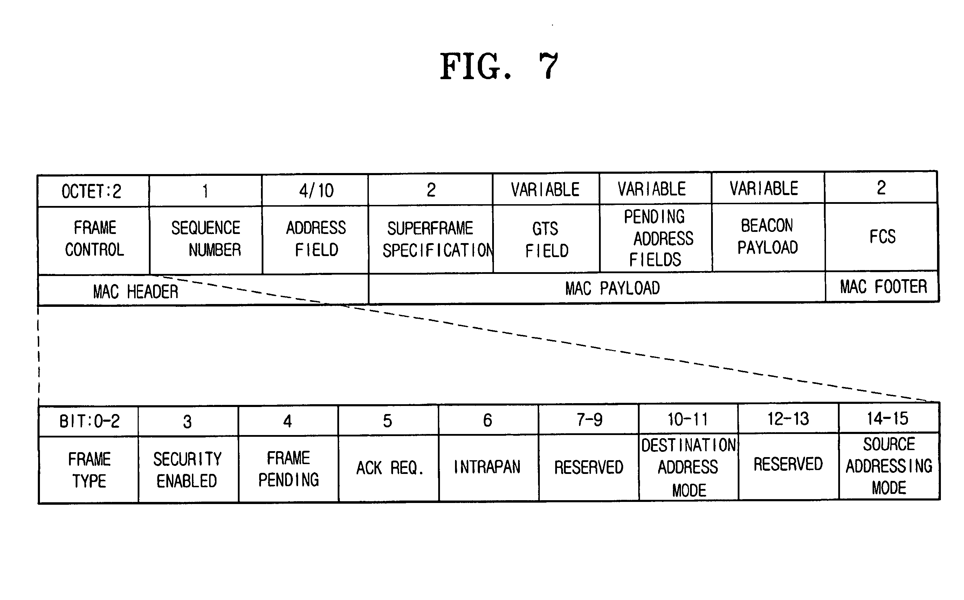

FIG. 7 illustrates the structure of beacon frame which is used by the broadcast method of a WPAN consistent with one embodiment of the present invention.

Referring to FIG. 7, a beacon frame comprises a frame control field, a sequence number field, an address field, a superframe specification field, a guaranteed timeslot (GTS) field, a pending address field, a beacon payload field, and a frame check sequence (FCS) field. As shown in FIG. 7, a beacon frame broadcasted by the coordinator 100 generally meets the conditions under the IEEE 802.15.4 standard, except for the fact that a coordinator realignment command is inserted in the payload of the beacon frame and thus requires an identify bit in the 12-13 reserved bits of the frame control field.

Accordingly, if the 12-13 reserved bits indicate a value '00', it indicates that there is no coordinator realignment command in the payload field of the beacon frame, while if the value is '01', it indicates that the coordinator realignment command for the change of channel is inserted in the payload of the beacon frame. If the reserved bits indicates a value '11', there is a coordinator realignment command for a PAN ID change being inserted in the payload of the beacon frame. Accordingly, the devices can change a channel or a PAN ID if they receive a beacon frame and find the identify bit and coordinator realignment command. Meanwhile, under the IEEE 802.15.4 standard which uses 27 channels, a channel is indicated using 5 bits and a PAN ID is indicated using 16 bits.

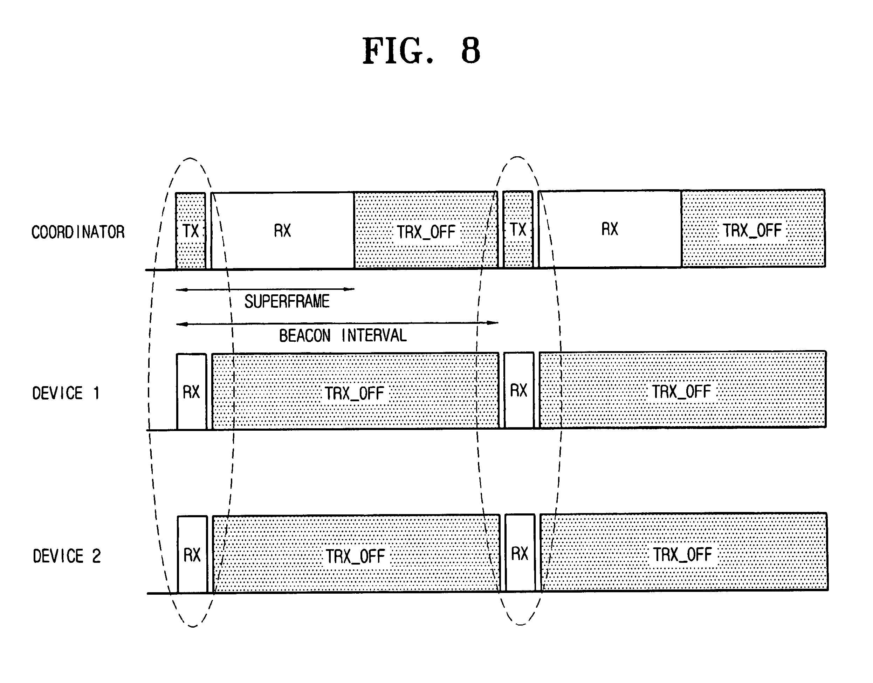

FIG. 8 is a view illustrating a broadcast method of a wireless network consistent with one embodiment of the present invention.

Referring to FIG. 8, the coordinator 100 broadcasts a beacon frame when the devices 200 are in the RX_ON state which can receive data. The area in the dotted ellipse represents a data receivable area. Accordingly, by inserting the change information of a channel or a PAN ID in the beacon frame and transmitting the beacon frame when the devices of the network are in data receivable state, it is ensured that all the devices in the network can receive the change information.

As described above in a few exemplary embodiments of the present invention, the change information of a channel or PAN ID is inserted in the beacon frame and the beacon frame is broadcast to the devices of the network. As a result, all the devices within the network can receive the change information and therefore, are prevented from becoming isolated. Because there is no overhead time required for performing re-synchronization or an orphan scan, overall communication efficiency improves.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1.  A broadcast method for a wireless network comprising a plurality of connected devices in which one of the plurality of connected devices is selected to be a coordinator and the rest of the plurality of connected devices are synchronized to a synchronous signal broadcasted by the coordinator, the broadcast method comprising:

    checking whether one of a current channel and a personal area network (PAN) ID of the wireless network needs to be changed; and
    inserting a change information for changing one of the channel and the PAN ID in the synchronous signal and broadcasting the synchronous signal, when it is determined in the checking that one of the channel and the PAN ID needs to be changed,
    **characterized in that**
    the change information comprises a coordinator realignment command inserted in a payload field of the synchronous signal, and a predetermined identify bit inserted in the reserved bit of a frame control field of the synchronous signal.

2.  The broadcast method of claim 1, further comprising by the plurality of connected devices, changing one of the channel and the PAN ID based on the change information inserted in the synchronous signal.

3.  The broadcast method of claim 2, wherein the wireless network is a low-rate wireless personal area network under the IEEE 802.15.4 standard.

4.  The broadcast method of any of claims 1 to 3, wherein the synchronous signal is a beacon frame.

5.  The broadcast method of any of claims 1 to 4, wherein whether to change the PAN ID is determined based on a PAN ID conflict command transmitted from one of the plurality of connected devices.

6.  A communication system comprising:

    one or more devices connected to a wireless network; and
    a coordinator (100) for synchronizing the one or more devices by broadcasting a synchronous signal, wherein the coordinator checks whether one of a current channel and a PAN ID of the wireless network needs to be changed, and if so, inserts a change information for changing one of the channel and the PAN ID in the synchronous signal, and broadcasting the synchronous signal,
    **characterized in that**
    the change information comprises a coordinator realignment command inserted in a payload field of the synchronous signal, and a predetermined identify bit inserted in the reserved bit of a frame control field of the synchronous signal.

7.  The communication system of claim 6, wherein the coordinator comprises:

    a transmitting and receiving unit (110) operable to provide a communication interface for communication with the one or more devices;

a channel status notifying unit (120) operable to check whether the channel needs to be changed and outputting a corresponding signal;

a channel selection management unit (130) operable to output a change information of the channel in accordance with the signal outputted from the channel status notifying unit;

a PAN ID changing unit (140) operable to check whether the PAN ID needs to be changed, and if so, outputting a change information of the PAN ID; and

a beacon frame generating unit (150) operable to insert the change signal from the channel selection management unit and the PAN ID change notifying unit in the synchronous signal, and broadcasting the synchronous signal to the one or more devices.

8. The communication system of claim 6, wherein the one or more devices each comprises:

a transmitting and receiving unit (210) operable to provide a communication interface with the coordinator;

a beacon frame interpretation unit (220) operable to extract the change information from the synchronous signal;

a channel changing unit (230) operable to change the channel according to the extracted change information; and

a PAN ID changing unit (240) operable to change the PAN ID according to the extracted change information.

9. The communication system of any of claims 6 to 8, wherein the wireless network is a low-rate wireless personal area network (WPAN) under the IEEE 802.15.4 standard.

10. The communication system of any of claims 6 to 9, wherein the synchronous signal is a beacon frame.

11. The communication system of any of claims 6 to 10, wherein the PAN ID is changed according to a PAN ID conflict command transmitted from the one or more devices connected to the wireless network.


**Patentansprüche**

1. Rundsendeverfahren für ein Drahtlos-Netzwerk, das eine Vielzahl verbundener Vorrichtungen umfasst, wobei eine der Vielzahl verbundener Vorrichtungen als ein Koordinator ausgewählt wird und der Rest der Vielzahl verbundener Vorrichtungen auf ein Synchronsignal synchronisiert wird, das durch den Koordinator rundgesendet wird, wobei das Rundsendeverfahren umfasst:

Prüfen, ob ein aktueller Kanal oder eine Kennung (ID) eines Personal-Area-Network (PAN) des Drahtlos-Netzwerks geändert werden muss; und

Einfügen von Änderungs-Informationen zum Ändern entweder des Kanals oder der PAN-Kennung in das Synchronsignal und Rundsenden des Synchronsignals, wenn bei dem Prüfen festgestellt wird, dass der Kanal oder die PAN-Kennung geändert werden muss,

**dadurch gekennzeichnet, dass**

die Änderungs-Informationen einen Koordinator-Neufestlegungsbefehl, der in ein Nutzdaten-Feld des Synchronsignals eingefügt wird, und ein vorgegebenes Identifizier-Bit umfasst, das in das reservierte Bit eines Frame-Control-Feldes des Synchronsignals eingefügt wird.

2. Rundsendeverfahren nach Anspruch 1 , das des Weiteren umfasst, dass durch die Vielzahl verbundener Vorrichtungen der Kanal oder die PAN-Kennung auf Basis der in das Synchronsignal eingefügten Änderungs-Informationen geändert wird.

3. Rundsendeverfahren nach Anspruch 2, wobei das Drahtlos-Netzwerk ein Drahtlos-PAN mit niedriger Rate nach dem Standard IEEE 802.15.4 ist.

4. Rundsendeverfahren nach einem der Ansprüche 1 bis 3, wobei das Synchronsignal ein Beacon-Frame ist.

5. Rundsendeverfahren nach einem der Ansprüche 1 bis 4, wobei auf Basis eines PAN-Kennungs-Konfliktbefehls, der von einer der Vielzahl verbundener Vorrichtungen gesendet wird, bestimmt wird, ob die PAN-Kennung geändert wird.

6. Kommunikationssystem, das umfasst:

eine oder mehrere Vorrichtung/en, die mit einem Drahtlos-Netzwerk verbunden ist/sind; und
einen Koordinator (100) zum Synchronisieren der einen oder mehreren Vorrichtung/en durch Rundsenden eines Synchronsignals, wobei der Koordinator prüft, ob ein aktueller Kanal oder eine PAN-Kennung des Drahtlos-Netzwerks geändert werden muss, und, wenn dies der Fall ist, Änderungs-Informationen zum Ändern des Kanals oder der PAN-Kennung in das Synchronsignal einfügt, sowie zum Rundsenden des Synchronsignals, **dadurch gekennzeichnet, dass**

die Änderungs-Informationen einen Koordinator-Neufestlegungsbefehl, der in ein Nutzdaten-Feld des Synchronsignals eingefügt wird, und ein vorgegebenes Identifizier-Bit umfassen, das in das reservierte Bit eines Frame-Control-Feldes des Synchronsignals eingefügt wird.

7. Kommunikationssystem nach Anspruch 6, wobei der Koordinator umfasst:

eine Sende-und-Empfangs-Einheit (110), die so betrieben werden kann, dass sie eine Kommunikationsschnittstelle zur Kommunikation mit der einen oder den mehreren Vorrichtung/en bereitstellt;
eine Kanalstatus-Mitteilungseinheit (120), die so betrieben werden kann, dass sie prüft, ob der Kanal geändert werden muss, und die das entsprechende Signal ausgibt;
eine Kanalauswahl-Verwaltungseinheit (130), die so betrieben werden kann, dass sie Änderungs-Informationen des Kanals entsprechend dem von der Kanalstatus-Mitteilungseinheit ausgegebenen Signal ausgibt;
eine PAN-Kennungs-Änderungseinheit (140), die so betrieben werden kann, dass sie prüft, ob die PAN-Kennung geändert werden muss, und wenn dies der Fall ist, Änderungs-Informationen der PAN-Kennung ausgibt; und
eine Beacon-Frame-Erzeugungseinheit (150), die so betrieben werden kann, dass sie das Änderungs-Signal von der Kanalauswahl-Verwaltungseinheit und der PAN-Kennungs-Änderungs-Mitteilungseinheit in das Synchronsignal einfügt und das Synchronsignal zu der einen oder den mehreren Vorrichtung/en sendet.

8. Kommunikationssystem nach Anspruch 6, wobei die eine oder die mehreren Vorrichtung/en jeweils umfasst/umfassen:

eine Sende-und-Empfangs-Einheit (210), die so betrieben werden kann, dass sie eine Kommunikationsschnittstelle mit dem Koordinator schafft;
eine Beacon-Frame-Interpretationseinheit (220), die so betrieben werden kann, dass sie die Änderungs-Informationen aus dem Synchronsignal extrahiert;
eine Kanaländerungseinheit (230), die so betrieben werden kann, dass sie den Kanal entsprechend den extrahierten Änderungsinformationen ändert; und
eine PAN-Kennungs-Änderungseinheit (240), die so betrieben werden kann, dass sie die PAN-Kennung entsprechend den extrahierten Änderungsinformationen ändert.

9. Kommunikationssystem nach einem der Ansprüche 6 bis 8, wobei das Drahtlos-Netzwerk ein Drahtlos-PAN (WPAN) mit niedriger Rate nach dem Standard IEEE 802.15.4 ist.

10. Kommunikationssystem nach einem der Ansprüche 6 bis 9, wobei das Synchronsignal ein Beacon-Frame ist.

11. Kommunikationssystem nach einem der Ansprüche 6 bis 10, wobei die PAN-Kennung entsprechend einem PAN-Kennungs-Konfliktbefehl geändert wird, der von der einen oder den mehreren Vorrichtung/en gesendet wird, die mit dem Drahtlos-Netzwerk verbunden ist/sind.

**Revendications**

1. Procédé de diffusion pour un réseau sans fil consistant en une pluralité de dispositifs connectés dans lequel l'un de la pluralité de dispositifs connectés est sélectionné pour être un coordinateur et le reste de la pluralité de dispositifs connectés sont synchronisés à un signal synchrone diffusé par le coordinateur, le procédé de diffusion comprenant :

vérifier si l'un d'un canal de courant et d'un ID de réseau personnel (PAN) du réseau sans fil a besoin d'être changé ou non; et
insérer une information de changement pour changer l'un du canal et de l'ID de PAN dans le signal synchrone et diffuser le signal synchrone, quand il est déterminé dans la vérification que l'un du canal et de l'ID de PAN doit être changé,
**caractérisé en ce que**, l'information de changement comprend une commande de réalignement de coordinateur insérée dans un champ de données du signal synchrone, et un bit d'identification inséré dans le bit réservé d'un champ de contrôle de trame du signal synchrone.

2. Procédé de diffusion selon la revendication 1, comprenant en outre par la pluralité de dispositifs connectés de changer l'un du canal et de l'ID de PAN en fonction de l'information de changement insérée dans le signal synchrone.

3. Procédé de diffusion selon la revendication 2, dans lequel le réseau sans fil est un réseau personnel sans fil bas débit sous la norme IEEE 802.15.4.

4. Procédé de diffusion selon l'une quelconque des revendications 1 à 3, dans lequel le signal synchrone est une trame balise.

5. Procédé de diffusion selon l'une quelconque des revendications 1 à 4, dans lequel s'il faut changer l'ID de PAN est déterminé en fonction d'une commande de conflit d'ID de PAN transmise depuis l'un de la pluralité de dispositifs connectés.

6. Système de communication comprenant :

un ou plusieurs dispositifs connectés à un réseau sans fil; et
un coordinateur (100) pour synchroniser le ou les dispositifs en diffusant un signal synchrone, dans lequel le coordinateur vérifie si l'un d'un canal et d'une ID de PAN du réseau sans fil doit être changé, et si c'est le cas insère une information de changement pour changer l'un du canal et de l'ID de PAN dans le signal synchrone et diffuse le signal synchrone,
**caractérisé en ce que**
l'information de changement comprend une commande de réalignement de coordinateur insérée dans un champ de données du signal synchrone, et un bit d'identification prédéterminé inséré dans le bit réservé d'un champ de contrôle de trame du signal synchrone.

7. Système de communication selon la revendication 6, dans lequel le coordinateur comprend ;
une unité d'émission et de réception (110) pouvant fonctionner pour fournir une interface de communication pour communiquer avec un ou plusieurs dispositifs ;
une unité de notification de statut de canal (120) pouvant fonctionner pour vérifier si le canal doit être changé et sortir un signal correspondant ;
une unité de gestion de sélection de canal (130) pouvant fonctionner pour sortir une information de changement du canal en fonction du signal sorti par l'unité de notification de statut de cana ;
une unité de notification de changement d'ID de PAN (140) pouvant fonctionner pour vérifier si l'ID de PAN doit être changée, et si c'est le cas, sortir une information de changement de l'ID de PAN ; et
une unité de génération de trame balise (150) pouvant fonctionner pour insérer le signal de changement venant de l'unité de gestion de sélection de canal et de l'unité de notification de changement d'ID de PAN 140 dans le signal synchrone, et diffuser le signal synchrone vers le ou les dispositifs.

8. Système de communication selon la revendication 6, dans lequel le ou les dispositifs comprennent chacun :

une unité d'émission et de réception (210) pouvant fonctionner pour fournir une interface de communication avec le coordinateur ;
une unité d'interprétation de trame balise (220) pouvant fonctionner pour extraire l'information de changement du signal synchrone ;
une unité de changement de canal (230) pouvant fonctionner pour changer le canal en fonction de l'information de changement extraite ;
une unité de changement d'ID de PAN (240) pouvant fonctionner pour changer l'ID de PAN en fonction de l'information de changement extraite.

9. Système de communication selon l'une quelconque des revendications 6 à 8, dans lequel le réseau sans fil est un réseau personnel sans fil bas débit (WPAN) sous la norme IEEE 802.15.4.

10. Système de communication selon l'une quelconque des revendications 6 à 9, dans lequel le signal synchrone est une trame balise.

**11.** Système de communication selon l'une quelconque des revendications 6 à 10, dans lequel l'ID de PAN est changé en fonction de la commande de conflit d'ID de PAN transmise depuis le ou les dispositifs connectés au réseau sans fil.

# FIG. 1

# FIG. 2

# FIG. 3

| OCTETS 17/23 | 1 | 2 | 2 | 1 | 2 |
|---|---|---|---|---|---|
| MAC HEADER FIELDS | COMMAND FRAME IDENTIFIER | PAN IDENTIFIER | COORDINATOR SHORT ADDRESS | LOGICAL CHANNEL | SHORT ADDRESS (DEVICE) |

# FIG. 4

100

| 110 | 120 | 130 |
|---|---|---|
| TRANSMITTING AND RECEIVING UNIT | CHANNEL STATUS NOTIFYING UNIT | CHANNEL SELECTION MANAGEMENT UNIT |

140

PAN ID CHANGE NOTIFYING UNIT

150

BEACON FRAME GENERATING UNIT

# FIG. 5

200

| 210 | 220 | 230 |
|---|---|---|
| TRANSMITTING AND RECEIVING UNIT | BEACON FRAME INTERPRETATION UNIT | CHANNEL CHANGING UNIT |

240

PAN ID CHANGING UNIT

# FIG. 6

START

S300 — TO CHANGE COMMUNICATION CHANNEL ?

Y

N

S310 — TO CHANGE PAN ID ?

Y

N

S320 — INSERT CHANGE INFORMATION IN BEACON FRAME AND BROADCAST

S330 — NORMAL COMMUNICATION PROCESS

END

# FIG. 7

| OCTET:2 | 1 | 4/10 | 2 | VARIABLE | VARIABLE | VARIABLE | 2 |
|---|---|---|---|---|---|---|---|
| FRAME CONTROL | SEQUENCE NUMBER | ADDRESS FIELD | SUPERFRAME SPECIFICATION | GTS FIELD | PENDING ADDRESS FIELDS | BEACON PAYLOAD | FCS |
| MAC HEADER | | | MAC PAYLOAD | | | | MAC FOOTER |

| BIT:0-2 | 3 | 4 | 5 | 6 | 7-9 | 10-11 | 12-13 | 14-15 |
|---|---|---|---|---|---|---|---|---|
| FRAME TYPE | SECURITY ENABLED | FRAME PENDING | ACK REQ. | INTRAPAN | RESERVED | DESTINATION ADDRESS MODE | RESERVED | SOURCE ADDRESSING MODE |

EP 1 528 717 B1

# FIG. 8

EP 1 528 717 B1

| COORDINATOR | TX | RX | TRX_OFF | TX | RX | TRX_OFF |

SUPERFRAME

BEACON INTERVAL

| DEVICE 1 | RX | TRX_OFF | RX | TRX_OFF |

| DEVICE 2 | RX | TRX_OFF | RX | TRX_OFF |